# EUROPEAN PATENT APPLICATION

(11) **EP 1 653 187 A1**
(43) Date of publication of application: **03.05.2006**
(21) Application number: 05109775.6
(22) Date of filing: 20.10.2005
(51) Int. Cl.: F28F 9/007, F24F 13/30

(54) **Corner profile for air heat treatment units**

(30) Priority: 28.10.2004 IT MI20040484 U
(71) Applicant: Recuperator s.r.l., 20121 Milano (IT)
(72) Inventor: Grilli, Ciro, I-20154, MILANO (IT)
(74) Representative: Mittler, Enrico

(57) **Abstract**

Herein described is a corner profile for air heat treatment units comprising a plurality of heat exchange grouped plates (13), connected by means of corner profiles (1) to positioning walls (7), said corner profile (1) comprising a shaped body (2) and a couple of flexible sealing lips (3) suitable for engaging with end portions (8) of said positioning walls (7). Said couple of flexible sealing lips (3) are made in a single piece with said shaped body (2).

## Description

The present invention refers to a corner profile for air heat treatment units.

Corner profiles suitable for correctly positioning air heat treatment units are known and are formed of two parts, a shaped body and a couple of lips, assembled so as to guarantee the sealing in relation to a positioning wall.

Currently, the manufacturer produces the two parts separately and assembles them in a second step with a considerable waste of time.

The assembly must also be made with special care to correctly engage the corner profile with the positioning wall, thus avoiding any risk of loss.

The sealing must be optimal to guarantee high performance of the air heat treatment units.

Object of the present invention is to produce a corner profile more rapidly and simply, while maintaining however high sealing performances.

In accordance with the invention this object is achieved with a corner profile for air heat treatment units comprising a plurality of heat exchange plates grouped together, connected by means of corner profiles to positioning walls, said corner profile comprising a shaped body and a couple of flexible sealing lips suitable for engaging with end portions of said positioning walls, characterised in that said couple of flexible sealing lips are made in one piece with said shaped body.

Said flexible lips, normally obtained with the same material as the corner profile, can, when needed, be made from different material, guaranteeing the same or greater flexibility.

The present invention thus permits the complete elimination of the assembly step thus decreasing the production times of the profile.

The characteristics and advantages of the present invention will appear more evident from the following detailed description of an embodiment thereof illustrated as non-limiting example in the enclosed drawings, in which:
Figure 1 shows a top plan view of a corner profile according to the present invention;
Figure 2 shows a top plan view of a corner profile according to the known technique;
Figure 3 shows a plan view of an air heat treatment unit in which the corner profile is used according to the present invention.

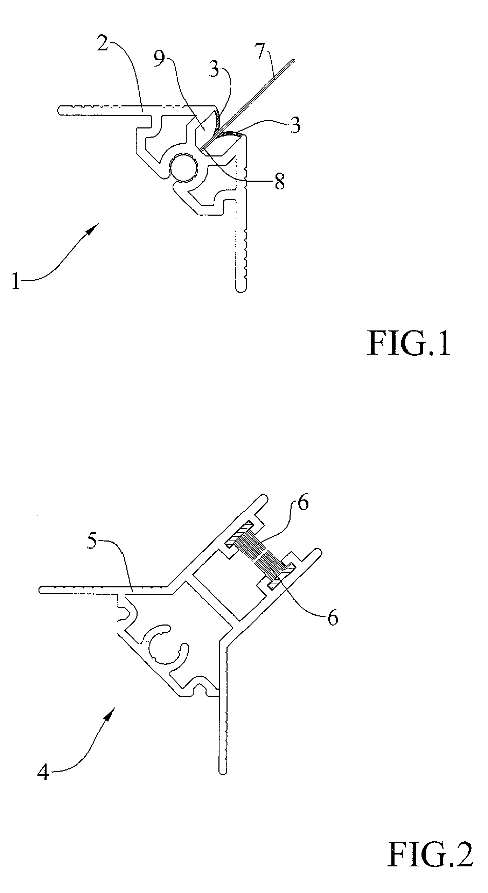

In Figure 1 a corner profile 1 according to the present invention is shown, constituted by a shaped body 2 and by a couple of flexible sealing lips 3 suitable for engaging with a positioning wall 7 whose end 8 is inserted into a cavity 9 of the shaped body 2.

A known corner profile 4 (Figure 2) instead comprises a shaped body 5 and a couple of flexible sealing lips 6 made separately from the shaped body 5 and fixed thereto in a known manner.

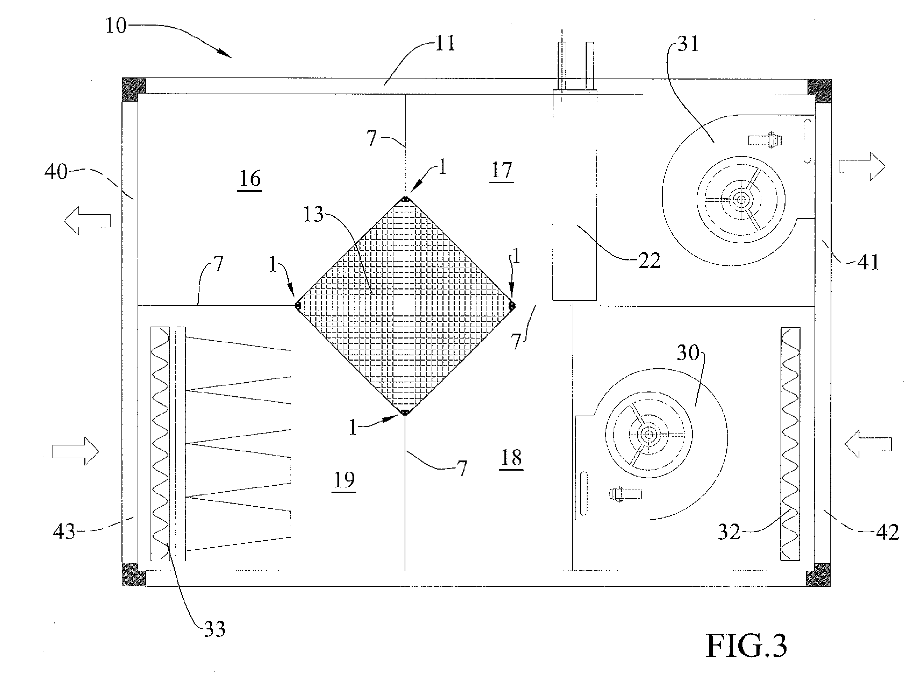

An air heat treatment unit 10 is shown in Figure 3 and comprises a frame 11 having openings 40-43 and a series of grouped plates 13 connected to positioning walls 7 by means of corner profiles 1.

Said positioning walls 7 subdivide the internal part of the unit 10 into four chambers 16-19.

Fans 30-31 guarantee the circulation of the air that is purified in inlet by filters 32-33.

The unit 10 in addition comprises one or more supplementary heat exchange batteries 22. In the production of heat exchange units in which the treatment is reduced to the simple recovery of heat, the heat exchange battery 22 is not included.

The engagement of the corner profile 1 with the wall 5 comes about thanks to the flexibility of the lips 3 which, even though are made in one single piece in plastic together with the shaped body 2, are more flexible than the body 2 itself in virtue of their reduced thickness, different material, different design.

By inserting the end 8 of a wall 7 into the cavity 9 the lips 3 fold over.

The walls of the lips 3 adhere perfectly to the wall 7 thus guaranteeing the sealing.

The effectiveness of the profile 1 is understandable by analysing its use in the air heat treatment unit 10 illustrated in Figure 3.

The hot air coming from a hot environment on the right of the unit 10 (looking at Figure 3) enters from opening 42 (see arrow) into the chamber 18 and pushed by the fan 30, diagonally crosses the series of plates 13 arriving cooled into the chamber 16. The heat given off by the hot air is absorbed by the air coming from a cold environment on the left of the unit 10 that is pushed by the fan 31 from the chamber 19 to the chamber 17 through the series of grouped plates 13.

The filters 32-33 purify the entering air to improve the heat exchange in the zone of the plates 13.

The corner profiles 1 guarantee the sealing of the chambers 16-19.

The supplementary exchange battery 22, or the batteries, modifies the temperature of the air that arrives at the chamber 17.

The corner profile 1 can in general be of any shape and with corner opening as desired thus adapting itself to various applications.

## Claims

1. Corner profile for air heat treatment units comprising a plurality of heat exchange grouped plates (13), connected by means of corner profiles (1) to positioning walls (7), said corner profile (1) comprising a shaped body (2) and a couple of flexible sealing lips (3) suitable for engaging with end portions (8) of said positioning walls (7), **characterised in that** said couple of flexible sealing lips (3) are made in a single piece with said shaped body (2).

2. Corner profile according to claim 1, **characterised in that** said flexible lips (3) are positioned at the entrance of a cavity (9) of said shaped body (2), within which the end portions (8) of the positioning walls (7) are inserted thereby making the flexible lips (3) to fold over towards said cavity (9).
